# EUROPÄISCHE PATENTSCHRIFT

(11) **EP 0 794 592 B1**
(45) Veröffentlichungstag und Bekanntmachung des Hinweises auf die Patenterteilung: **13.09.2000**
(21) Anmeldenummer: 97100221.7
(22) Anmeldetag: 09.01.1997
(51) Int. Cl.: H01R 9/26, H02B 1/20

(54) **Verteilerkamm mit Anschlusselement**
Comb-shaped dispenser with connecting terminal
Distributeur en forme d'un peigne avec une borne de connexion

(30) Priorität: 08.03.1996 DE 29604334 U
(43) Veröffentlichungstag der Anmeldung: 10.09.1997
(73) Patentinhaber: Weidmüller Interface GmbH & Co., D-32760 Detmold (DE)
(72) Erfinder: Schnatwinkel, Michael, 32051 Herford (DE); Wilmes, Manfred, 32760 Detmold (DE); Hanning, Walter, 32758 Detmold (DE)
(74) Vertreter: Stracke, Alexander, Dipl.-Ing.

(56) Entgegenhaltungen:
- EP-A- 0 359 678
- EP-A- 0 577 459
- EP-A- 0 678 934
- DE-A- 4 223 540
- DE-C- 4 411 306

## Beschreibung

Die Erfindung betrifft einen Verteilerkamm für die Querverteilung elektrischer Potentiale zwischen Anschlußstellen für elektrische Leiter an Anschlußeinheiten gemäß Oberbegriff des Anspruches 1.

Derartige Verteilerkamme sind aus EP-A-678 934 bekannt.

In der elektrischen Anschluß- und Verbindungstechnik, beispielsweise in der Technik von Reihenklemmen oder dergleichen, ist es ein häufig auftretendes Problem, elektrische Potentiale-innerhalb einer Reihung von Anschlußstellen zwischen diesen Anschlußstellen quer zu verteilen. Beispielsweise werden Basispotentiale zur Stromversorgung oder Signalpotentiale an mehreren Anschlußstellen gleichzeitig benötigt, ohne daß die einzelnen Anschlußstellen aufwendig durch flexible Kabel miteinander verbunden werden sollen. Hierzu ist es bekannter Stand der Technik, in den Anschlußeinheiten wie z. B. Reihenklemmen entsprechende Steckplätze in jeder Anschlußstelle z. B. der Reihenklemme vorzusehen, in die auf ebenfalls bekannte Weise aufgebaute Querverbindungskämme einsteckbar sind. Diese Querverbindungskämme bestehen aus Kontaktelementen in entsprechender Anzahl der zu verbindenden Anschlußstellen, wobei diese Kontaktelemente üblicherweise steckerförmig ausgebildet sind und mit diesen steckerförmigen Enden in die zugeordneten Steckplätze der Anschlußeinheit einsteckbar sind. An ihren der steckplatzseitigen Kontaktseite abgewandten Enden sind diese Kontaktelemente kammartig mechanisch und elektrisch leitend miteinander verbunden, so daß das beispielsweise in einem bestimmten Steckplatz der Reihung anliegende Potential über das zugeordnete Kontaktelement in den Brückenbereich zwischen den Kontaktelementen und damit an die benachbarten und/oder weiter entfernt liegende Kontaktelemente weitergeleitet wird. Die Anzahl bzw. Poligkeit dieser aus Kontaktelementen aufgebauten Verteilerkämme kann hierbei weitgehend den jeweiligen Bedürfnissen des Anwenders angepaßt werden. Insbesondere können auch die Kontaktelemente so ausgebildet sein, daß der Anwender leicht einzelne Kontaktelemente aus dem Verteilerkamm ausbrechen und somit bestimmte Anschlußstellen von der Querverteilung mit Hilfe des Verteilerkammes ausnehmen kann. Derartige Verteilerkämme sind zumindestens in dem nach dem bestimmungsgemäßen Einstecken des Verteilerkammes in die Steckplätze der Anschlußeinheit freiliegenden Bereich des Verteilerkammes in geeigneter Weise gegenüber der Berührung von elektrisch leitenden Teilen geschützt, beispielsweise durch einen Isolierüberzug oder entsprechende Isoliergehäusebauteile.

Es ist ein in dieser Art der Querverteilung häufig auftretendes Problem, daß das quer zu verteilende Potential von außerhalb der Anschlußeinheit herangeführt und in einen Anschlußplatz mittels eines elektrischen Leiters eingespeist wird. Durch interne Potentialführung wird dann von der Anschlußstelle des zugeführten elektrischen Potentiales eine elektrisch leitende Verbindung zu dem Querverteilerkamm geschaffen, so daß das elektrische Potential mittels des beschriebenen Verteilerkammes querverteilt werden kann. Eine derartige Anordnung ist besonders nachteilig, da durch eine derartige Anordnung eine Anschlußstelle der als Reihenklemme ausgeführten Anschlußeinheit allein für die Zuführung des externen elektrischen Potentiales verlorengeht. Desweiteren ist bei einer vorstehend genannten Ausführung der Querverteilung von Nachteil, daß bei weiter voneinander entfernten, elektrisch aber auf das gleiche Potential zu legenden Anschlußstellen eine erneute Einspeisung dieses Potentiales in der Nähe des weiter entfernten Bereiches in der schon vorstehend genannten Weise erfolgen muß. Hierdurch geht in der Regel erneut eine Anschlußstelle der Anschlußeinheit verloren. Auch ist mit dem vorstehend beschriebenen Verteilerkamm eine Querverteilung über eine bauartbedingt vorgegebene Unterbrechung der Reihung, beispielsweise einer Anschlußeinheit aus einer Reihenklemme, normalerweise nicht möglich, da zwei benachbarte Reihenklemmen sich nicht zwangsläufig so benachbart zueinander befinden, daß das Rastermaß des Verteilerkammes exakt eingehalten ist.

Es ist bei Sammelschienenanordnungen bekannt (EP-A-359 678), ausgehend von der zentralen Sammelschiene einzelne Querverbindungsstege in die äußeren Klemmstellen der Anordnung zu führen, so daß auf der einen Anschlußseite die eine Reihe der Anschlußklemmen über diese Sammelschiene und den dort systembedingt benötigten und integrierten Leiteranschluß auf gleiches Potential gesetzt ist. Ein zusätzlicher Leiteranschluß ist dort nicht vorgesehen und wird von der Funktion her auch nicht benötigt. Lediglich die gegenüber der Sammelschienenseite angeordneten Anschlußklemmen der Anordnung sind zum Anschließen elektrischer Leiter vorgesehen. Die Anordnung hat somit nur an einer Anschlußseite unabhängige Leiteranschlüsse.

Es ist daher Aufgabe der vorliegenden Erfindung, einen bekannten Verteilerkamm für die Querverteilung elektrischer Potentiale zwischen Anschlußstellen für elektrische Leiter an Anschlußeinheiten derart weiterzuentwickeln, daß eine einfache Einspeisung und Weiterverzweigung elektrischer Potentiale allein mit Hilfe eines Verteilerkammes ermöglicht ist.

Die Lösung der erfindungsgemäßen Aufgabe ergibt sich aus den Merkmalen des Schutzanspruches 1 in Verbindung mit den Merkmalen des Oberbegriffs.

Der erfindungsgemäße Verteilerkamm weist mindestens ein Anschlußelement für einen elektrischen Leiter auf, das elektrisch mit den Kontaktelementen verbunden ist. Hierdurch kann ohne die Notwendigkeit eines Anschlusses an einer der vorgesehenen Anschlußstellen der Anschlußeinheit ein elektrischer Leiter, der beispielsweise ein externes Potential heranführt oder zur Weiterverteilung eines elektrischen Potentiales bestimmt ist, direkt an den Verteilerkamm angeschlossen werden. Es entfällt daher die Notwendigkeit, eine gesonderte Anschlußstelle zur Zuführung eines elektrischen Potentiales an den Verteilerkamm vorzusehen und dadurch die Anzahl der Anschlußstellen für beispielsweise den Anschluß von Aktoren, Initiatoren oder dergleichen einzuschränken. Beispielsweise kann an einer Reihenklemmenanordnung für eine Digital-Eingabe-/Ausgabebaugruppe ein zusätzlicher Anschluß in der vorstehend beschriebenen Weise erreicht werden. Darüberhinaus ist die Verlängerung eines erfindungsgemäßen Verteilerkammes mittels Drahtbrücken möglich, indem das elektrische Potential an einer Stelle des mit einer erfindungsgemäßen Anschlußmöglichkeit versehenen Verteilerkammes abgenommen und mittels Drahtbrücke an einem räumlich entfernt angeordneten, ebenfalls mit einer Anschlußeinheit versehenen Verbindungskamm geführt wird. Darüberhinaus kann der erfindungsgemäße Verteilerkamm zum Ersatz oder zum Nachrüsten eines zusätzlichen Anschlusses beispielsweise auf einer Durchgangsklemme genutzt werden. Auch ist der Einsatz als Steckverbinder gleichen Potentials beispielsweise auch an Reihenklemmen möglich.

In einer besonders bevorzugten Ausführungsform ist das mindestens eine Anschlußelement an dem Verteilerkamm im Brückenbereich der Kontaktelemente angeordnet. Hierdurch ist das Anschlußelement besonders gut zugänglich, wenn der Verteilerkamm bestimmungsgemäß in die Anschlußeinheit eingesteckt ist. Darüberhinaus kann der Brückenbereich derart mechanisch stabilisiert ausgeführt werden, daß die beim Anschluß von Leitern in dem Anschlußelement auftretenden Betätigungskräfte sicher abgestützt sind.

In einer weiteren bevorzugten Ausführungsform ist mehr als ein Anschlußelement im Brückenbereich der Kontaktelemente an dem Verteilerkamm vorsehbar. Hierbei kann in einer weiteren Ausführungsform je Kontaktelement des Verteilerkammes ebenfalls je ein Anschlußelement vorgesehen werden. Beispielsweise kann auch in einer anderen bevorzugten Ausführungsform je ein Anschlußelement zu Beginn und am Ende der Reihung der Kontaktelemente des Verteilerkammes vorgesehen sein. Hierdurch ist es insbesondere möglich, direkt benachbarte erfindungsgemäße Verteilerkämme mittels sehr kurzer Drahtbrücken miteinander zu verbinden. Darüberhinaus ist jede weitere Anordnung von mehr als einem Anschlußelement an einem ertindungsgemäßen Verteilerkamm denkbar, die beispielsweise auch vom Anwender vorgebbar sein kann.

Eine weitere bevorzugte Ausführungsform des Verteilerkammes weist Anschlußelemente auf, bei denen die Anschlußrichtung für die in die Anschlußelemente einsteckbaren Leiter parallel zur Einsteckrichtung der Kontaktelemente in die Anschlußeinheit angeordnet ist. Hierdurch ist eine besonders gute Zugänglichkeit der Anschlußelemente des üblicherweise von oben in beispielsweise eine Reihenklemme einsteckbaren Verteilerkammes gegeben.

In einer weiteren bevorzugten Ausführungsform ist die Anschlußrichtung für die in die Anschlußelemente einsteckbaren Leiter quer zur Einsteckrichtung der Kontaktelemente in die Anschlußeinheit angeordnet. Beispielsweise kann eine derartige Ausführungsform bei entsprechender Formgebung der Gehäusebauteile der Anschlußeinheit notwendig sein, um eine gute Betätigung der Anschlußelemente zu gewährleisten.

Eine besonders vorteilhafte Ausführungsform des erfindungsgemäßen Verteilerkammes besteht darin, daß die Anschlußelemente als Zugbügelanschlüsse ausgebildet sind. Eine weitere vorteilhafte Ausführungsform besteht darin, daß die Anschlußelemente als Druckbügelanschlüsse, bei denen die Leitereinführungsrichtung und die Betätigungsrichtung parallel liegen, ausgebildet sind. Darüberhinaus können in einer weiteren bevorzugten Ausführungsform die Anschlußelemente als Zugfederanschlüsse ausgebildet sein.

In besonders vorteilhafter Weise können die Zugfederanschlüsse einstückig an dem Brückenbereich des Verteilerkammes angeordnet sein, ebenfalls ist es möglich, die Stromschienen der Zugfederanschlüsse lösbar, vorzugsweise steckbar oder schraubbar an dem Brückenbereich des Verteilerkammes anzuordnen.

In einer weiteren Ausführungsform weisen die Anschlußelemente elektrisch isolierende Gehäuse auf, die über Positionier- und/oder Rastelemente mechanisch miteinander verbindbar sind. Derartige Gehäuse können darüberhinaus Führungselemente aufweisen, die im eingesteckten Zustand des Verteilerkammes mit korrespondierenden Elementen des Gehäuses der Anschlußeinheit die Anschlußelemente abstützen.

Es muß insbesondere dafür gesorgt sein, daß die Gehäuse der Anschlußelemente und die Isolierung des Brückenbereiches des Verteilerkammes ein Berühren elektrisch leitender Bauteile sicher verhindern.

In einer weiteren bevorzugten Ausführungsform können die Gehäuse der Anschlußelemente und die Isolierung des Brückenbereiches des Verteilerkammes einstückig ausgeführt sein.

Eine besonders bevorzugte Ausführungsform des erfindungsgemäßen Verteilerkammes zeigt die Zeichnung.

Es zeigen:
- Figur 1: einen Verteilerkamm mit vier Kontaktelementen und einem Anschlußelement in Seitenansicht,
- Figur 2: den Verteilerkamm gemäß Figur 1 in einer Rückansicht,
- Figur 3: einen erfindungsgemäßen Verteilerkamm gemäß Figur 1 im eingesteckten Zustand in eine handelsübliche Reihenklemme.

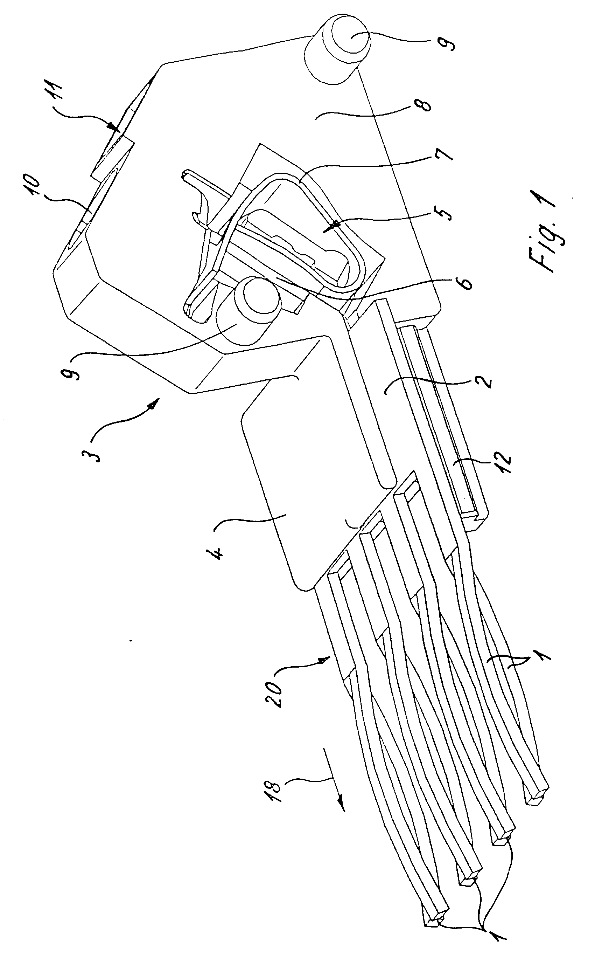

Die Figur 1 zeigt einen Verteilerkamm 20, der aus einer Reihung von hier vier Kontaktelementen 1 gebildet ist, wobei die vier Kontaktelemente 1 über einen Brückenbereich 2 kammartig miteinander verbunden sind. Die Enden der Kontaktelemente 1 sind in bekannter Weise federnd ausgeführt, um in einem in Figur 1 nicht dargestellten, zugeordneten Steckplatz 21 sicher mit den dort angeordneten Kontakten verbindbar zu sein.

An dem der Steckseite abgewandten Ende des Verteilerkammes 20 und anschließend an den Brückenbereich 2 ist ein Anschlußelement 3 an dem Verteilerkamm 20 angeordnet, das über eine Stromschiene 6 in elektrischer Verbindung mit dem Brückenbereich 2 des Verteilerkammes 20 steht. Zur Verbindung dieser Stromschiene 6 mit einem nicht dargestellten, beispielsweise ein externes Potential führenden Leiter, ist in dieser Ausführungsform das Anschlußelement 3 in Form eines Zugfederanschlusses 5 ausgeführt, der in bekannter Weise aus einer Zugfeder 7 und einem Gehäuse 8 gebildet ist. Die Ausführung des Zugfederanschlusses 5 entspricht dabei den bekannten Zugfederanschlüssen und soll daher nicht näher beschrieben werden. Das Gehäuse 8 des Anschlußelementes 3 ist in dieser Ausführungsform einstückig mit der Isolierung 4 des Verteilerkammes 20 ausgeführt, wodurch insbesondere eine gute Halterung zwischen Verteilerkamm 20 und Gehäuse 8 erzielbar ist. Das Gehäuse 8 sowie der Zugfederanschluß 5 sind so angeordnet, daß die Einsteckrichtung des nicht dargestellten Leiters in die Einstecköffnung 10 sowie die Betätigungsrichtung zur Betätigung der Zugfeder 7 entsprechend der Betätigungsöffnung 11 unter einem Winkel von ca. 45 Grad zur Einsteckrichtung 18 des Verteilerkammes 20 angeordnet sind. Hierbei kann jedoch jede Anordnung von Gehäusebauteilen und Zugfederanschluß 5 gewählt werden, um eine gute Zugänglichkeit der Einstecköffnung 10 und der Betätigungsöffnung 11 zu gewährleisten.

Das Gehäuse 8 des Anschlußelementes 3 weist darüberhinaus Reihungsbolzen 9 auf, die beispielsweise eine reihenartige Anordnung weiterer Anschlußelemente 3 und eine gegenseitige Führung und Stabilisierung der Gehäuse 8 der jeweiligen Anschlußelemente 3 gewährleistet. In der Figur 1 ist auf der Unterseite ein später noch näher erläutertes Führungselement 12 angeordnet, das mit dem Gehäuse 8 in dieser Ausführungsform einstückig gebildet ist und eine Festlegung des Verteilerkammes 20 an zugeordneten Gehäuseelementen einer Anschlußeinheit 13 gewährleistet.

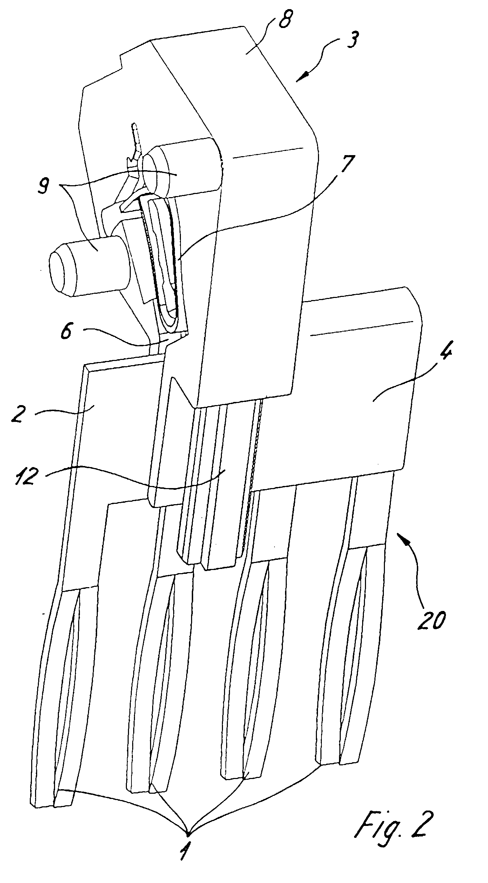

In der Figur 2 ist der Verteilerkamm 20 gemäß Figur 1 in einer Ansicht dargestellt, die einer Untersicht entsprechend der Orientierung des Verteilerkammes 20 in der Figur 1 entspricht. Hierdurch erkennt man noch einmal verbessert das Führungselement 12 sowie die einstückige Ausführung von Gehäuse 8 und Isolierung 4 des Verteilerkammes 20. Darüberhinaus gilt das zur Figur 1 vorstehend Gesagte.

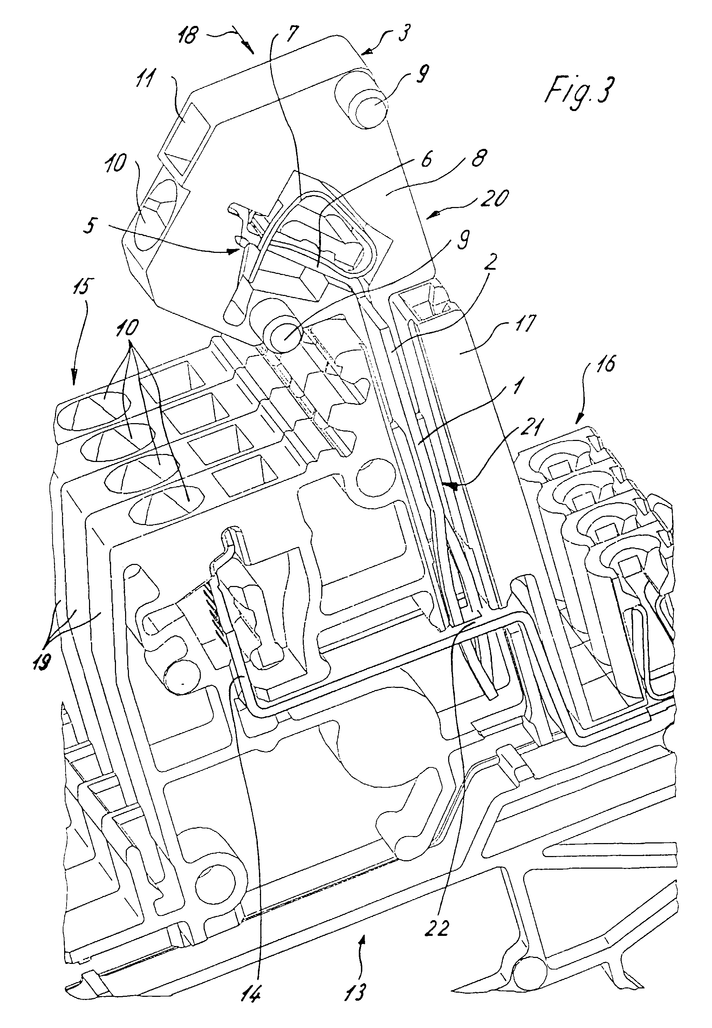

In der Figur 3 ist eine Anordnung eines erfindungsgemäßen Verteilerkammes 20 in einer in bekannter Weise aufgebauten Reihenklemme dargestellt, um die Funktion des Verteilerkammes 20 näher zu erläutern.

Die Reihenklemme besteht aus einem Gehäuse 13, in dem auf der Anschlußseite 15 Einstecköffnungen 10 für Leiter beispielsweise von Initiatoren oder Aktoren oder dergleichen gebildet sind. Die Reihenklemme ist hier in einer vierpoligen Ausführung aus vier Durchgangsklemmen 19 gebildet, wobei die Stromschienen 14 eine Verbindung zwischen der Anschlußseite 15 und der Steckseite 16 der jeweiligen Reihenklemme bilden. Der weitere Aufbau der Reihenklemme entspricht dem bekannter Reihenklemmen und soll daher an dieser Stelle nur insoweit erläutert werden, als er für die Funktion des erfindungsgemäßen Verteilerkammes 20 von Bedeutung ist.

Oberseitig des Gehäuses 3 der Reihenklemme ist der erfindungsgemäße Verteilerkamm 20 in den Steckplatz 21 des Gehäuses 13 der Reihenklemme eingesteckt, wobei die Kontaktelemente 1 aufgrund ihrer Federwirkung eine elektrische Verbindung mit einer Einstecköffnung 22 der Stromschiene 14 herstellen und somit eine elektrische Verbindung zwischen der Stromschiene 14 und dem Anschlußelement 3 herstellen. Die Verbindung mit einem nicht dargestellten, in die Einstecköffnung 10 einsteckbaren Leiter erfolgt dabei in schon vorstehend beschriebener Weise mittels eines Zugfederanschlusses 5, bei dem eine Zugfeder 7 den nicht dargestellten Leiter gegen eine Stromschiene 6 zieht und wobei diese Stromschiene 6 mit dem Brückenbereich 2 des Verteilerkammes 20 verbunden ist. Hierdurch können beispielsweise mittels des nicht dargestellten Leiters dem Anschlußelement 3 zugeführte elektrische Potentiale über den Verteilerkamm 20 und die Stromschiene 14 sowohl der Anschlußseite 15, hier aufgrund besserer Klarheit mittels nicht dargestellter Zugfederanschlüsse 5 mit weiteren Geräten verbindbar, und der Steckseite 16 zugeführt werden. Auf in der Figur 3 nicht genauer dargestellte Weise ist das Gehäuse 8 des Anschlußelementes 3 mittels der in der Figur 3 nicht erkennbaren Führungselemente 12 an der passend gebildeten Gehäuseführungswand 17 angeordnet, wodurch in besonders vorteilhafter Weise die Betätigungskräfte durch Betätigung des Anschlusses des Anschlußelementes 3 abgestützt sind.

In für die Figuren 1 bis 3 nicht näher dargestellter Weise können an dem Verteilerkamm 20 mehr als ein Anschlußelement 3 angeordnet sein, das beispielsweise zur Querverbindung zu weiteren, gleich oder ähnlich aufgebauten Verteilerkämmen 20 und/oder Reihenklemmen dienen kann.

### Bezugszeichenliste

- 1 -: Kontaktelemente
- 2 -: Brückenbereich
- 3 -: Anschlußelement
- 4 -: Isolierung Brückenbereich
- 5 -: Zugfederanschluß
- 6 -: Stromschiene Zugfeder
- 7 -: Zugfeder
- 8 -: Gehäuse
- 9 -: Reihungsbolzen
- 10 -: Einstecköffnung Leiter
- 11 -: Betätigungsöffnung Zugfeder
- 12 -: Führungselement
- 13 -: Gehäuse Reihenklemme
- 14 -: Stromschiene Reihenklemme
- 15 -: Anschlußseite Reihenklemme
- 16 -: Steckseite Reihenklemme
- 17 -: Gehäuseführungswand
- 18 -: Einsteckrichtung Verteilerkamm
- 19 -: Durchgangsklemmen
- 20 -: Verteilerkamm
- 21 -: Steckplatz
- 22 -: Einstecköffnung Verteilerkamm

## Patentansprüche

1. Verteilerkamm (20) für die innen liegende Querverteilung elektrischer Potentiale zwischen Anschlüssen für elektrische Leiter in Anschlußklemmen (19), insbesondere Reihenklemmen, mit mindestens zwei Kontaktelementen (1) für die Steckkontaktverbindung mit den Stromschienen (14) der Anschlußklemmen (19), wobei die Kontaktelemente (1) an ihrem einen Ende kammartig mechanisch und elektrisch leitend miteinander verbunden und in diesem Brückenbereich (2) berührungsisoliert sind, **dadurch gekennzeichnet, daß** der Verteilerkamm (20) selbst ein zusätzliches Anschlußelemcnt (3) für einen elektrischen Leiter zur Zuführung oder Abführung eines elektrischen Potentials aufweist, das elektrisch leitend mit den Kontaktelementen (1) verbunden ist.

2. Verteilerkamm (20) nach Anspruch 1, **dadurch gekennzeichnet, daß** das Anschlußelement (3) im Brückenbereich (2) der Kontaktelemente (1) an dem Verteilerkamm (20) angeordnet ist.

3. Verteilerkamm (20) nach einem der Ansprüche 1 oder 2, **dadurch gekennzeichnet, daß** mehr als ein Anschlußelement (3) im Brückenbereich (2) der Kontaktelemente (1) an dem Verteilerkamm (20) vorsehbar ist.

4. Verteilerkamm (20) nach einem der Ansprüche 1 oder 3, **dadurch gekennzeichnet, daß** je Kontaktelement (1) des Verteilerkammes (20) je ein Anschlußelement (3) vorsehbar ist.

5. Verteilerkamm (20) nach einem der Ansprüche 1 oder 3, **dadurch gekennzeichnet, daß** mindestens je ein Anschlußelement (3) zu Beginn und am Ende der Reihung der Kontaktelemente (1) des Verteilerkammes (20) vorsehbar ist.

6. Verteilerkamm (20) nach Anspruch 1, **dadurch gekennzeichnet, daß** die Anschlußrichtung für die in die Anschlußelemente (3) einsteckbaren Leiter parallel zur Einsteckrichtung (18) der Kontaktelemente (1) in die Anschlußeinheit (13) angeordnet ist.

7. Verteilerkamm (20) nach Anspruch 1, **dadurch gekennzeichnet, daß** die Anschlußrichtung unter einem Winkel von ca. 45 Grad zur Einsteckrichtung (18) der Kontaktelemente (1) in die Anschlußeinheit (13) angeordnet ist.

8. Verteilerkamm (20) nach Anspruch 1, **dadurch gekennzeichnet, daß** die Anschlußrichtung für die in die Anschlußelemente (3) einsteckbaren Leiter quer zur Einsteckrichtung (18) der Kontaktelemente (1) in die Anschlußeinheit (13) angeordnet ist.

9. Verteilerkamm (20) nach einem der vorstehenden Ansprüche, **dadurch gekennzeichnet, daß** das Anschlußelement (3) als Zugbügelanschluß oder als Druckbügelanschluß ausgebildet ist.

10. Verteilerkamm (20) nach einem der vorstehenden Ansprüche, **dadurch gekennzeichnet, daß** das Anschlußelement (3) als Zugfederanschluß (5) ausgebildet ist.

11. Verteilerkamm (20) nach einem der Ansprüche 9 oder 10, **dadurch gekennzeichnet, daß** die Stromschiene (6) des Anschlußelementes (3) einstückig an dem Brückenbereich (2) des Verteilerkammes (20) angeordnet ist.

12. Verteilerkamm (20) nach einem der Ansprüche 9 oder 10, **dadurch gekennzeichnet, daß** die Stromschiene (6) des Anschlußelementes (3) lösbar an dem Brückenbereich (2) des Verteilerkammes (20) vorzugsweise steckbar oder schraubbar anordenbar ist.

13. Verteilerkamm (20) nach einem der vorstehenden Ansprüche, **dadurch gekennzeichnet, daß** die Anschlußelemente (3) elektrisch isolierende Gehäuse (8) aufweisen, die über Positionier- und/oder Rastelemente (9) mechanisch miteinander verbindbar sind.

14. Verteilerkamm (20) nach einem der Ansprüche 8 bis 12, **dadurch gekennzeichnet, daß** die Gehäuse (8) der Anschlußelemente (3) Führungselemente (12) aufweisen, die im eingesteckten Zustand des Verteilerkammes (20) mit korrespondierenden Elementen (17) der Anschlußeinheit (13) die Anschlußelemente (3) abstützen.

15. Verteilerkamm (20) nach einem der Ansprüche 13 und 14, **dadurch gekennzeichnet, daß** die Gehäuse (8) der Anschlußelemente (3) und die Isolierung (4) des Brückenbereiches (2) des Verteilerkammes (20) ein Berühren elektrisch leitender Bauteile verhindern.

16. Verteilerkamm (20) nach Anspruch 14, **dadurch gekennzeichnet, daß** die Gehäuse (8) der Anschlußelemente (3) und die Isolierung (4) des Brückenbereiches (2) des Verteilerkammes (20) einstückig ausgeführt sind.

## Claims

1. Distributor comb (20) for the internally disposed transverse distribution of electric potentials between terminals for electric conductors in connecting terminals (19), especially terminal rows, with at least two contact elements (1) for plug contact connection with the busbar (14) of the connecting terminals (19), wherein the contact elements (1) are mechanically and electrically conductively connected together at their one end in comb-like manner and are insulated in terms of contact in the bridge region (2), characterised in that the distributor comb (20) itself comprises an additional connecting element (3) for an electrical conductor for feeding or conducting away an electric potential, which is electrically conductively connected with the contact elements (1).

2. Distributor comb (20) according to claim 1, characterised in that the connecting element (3) is arranged at the distributor comb (20) in the bridge region of the contact elements (1).

3. Distributor comb (20) according to one of claims 1 and 2, characterised in that more than one connecting element (3) can be provided at the distributor comb (20) in the bridge region (2) of the contact elements (1).

4. Distributor comb (20) according to one of claims 1 and 3, characterised in that a respective connecting element (3) can be provided for each contact element (1) of the distributor comb (20).

5. Distributor comb (20) according to one of claims 1 and 3, characterised in that a respective connecting element (3) can be provided at each of the beginning and end of the row of contact elements (1) of the distributor comb (20).

6. Distributor comb (20) according to claim 1, characterised in that the connection direction for the conductors able to be plugged into the connecting elements (3) is arranged parallel to the direction (18) of insertion of the contact elements (1) into the connecting unit (13).

7. Distributor comb (20) according to claim 1, characterised in that the connection 5 direction is arranged at an angle of about 45 degrees relative to the direction (18) of insertion of the contact elements (1) into the connecting unit (13).

8. Distributor comb (20) according to claim 1, characterised in that the connecting direction for the conductor able to be plugged into the connecting elements (3) is arranged transversely to the direction (18) of insertion of the contact elements (1) into the connecting unit (13).

9. Distributor comb (20) according to one of the preceding claims, characterised in that the connecting element (3) is constructed as a tension clip connector or as a compression clip connector.

10. Distributor comb (20) according to one of the preceding claims, characterised in that the connecting element (3) is constructed as a tension spring terminal (5).

11. Distributor comb (20) according to one claims 9 and 10, characterised in that the busbar (6) of the connecting element (3) is arranged integrally at the bridge region (2) of the distributor comb (20).

12. Distributor comb (20) according to one claims 9 and 10, characterised in that the busbar (6) of the connecting element (3) can be arranged detachably at the bridge region (2) of the distributor comb (20), preferably to be plugged or screwed.

13. Distributor comb (20) according to one of the preceding claims, characterised in that the connecting element (3) comprises electrically insulating housings (8), which are mechanically connectible together by way of positioning and/or detent elements (9).

14. Distributor comb (20) according to one of claims 8 to 12, characterised in that the housings (8) of the connecting elements (3) comprise guide elements (12) which in the inserted state of the distributor comb (20) support, together with corresponding elements (17) of the connecting unit (13), the connecting elements (3).

15. Distributor comb (20) according to one of claims 13 and 14, characterised in that the housings (8) of the connecting elements (3) and the insulation (4) of the bridge region (2) of the distributor comb (20) prevent contact of electrical conductive components.

16. Distributor comb (20) according to claim 14, characterised in that the busbar (6) of the housings (8) of the connecting elements (3) and the insulation (4) of the bridge region (2) of the distributor comb (20) are integrally constructed.

## Revendications

1. Distributeur en forme de peigne (20) destiné à la distribution transversale interne de potentiels électriques entre des raccords de conducteurs électriques dans des bornes de raccordement (19), en particulier des bornes en ligne, comprenant au moins deux éléments de contact (1) servant à la liaison de contact par enfichage avec les barres conductrices (14) des bornes de raccordement (19), les éléments de contact (1), à l'une de leurs extrémités, étant reliés entre eux de façon mécanique, à la façon d'un peigne, et de façon électriquement conductrice et étant, dans cette zone en forme de pont (2), isolés de tout contact, caractérisé en ce que le distributeur en forme de peigne (20) proprement dit présente un élément de raccordement (3) supplémentaire destiné à un conducteur électrique, afin d'assurer l'amenée ou l'évacuation d'un potentiel électrique, qui est relié, de façon électriquement conductrice, avec les éléments de contact (1).

2. Distributeur en forme de peigne (20) selon la revendication 1, caractérisé en ce que l'élément de raccordement (3), dans la zone en forme de pont (2) des éléments de contact (1), est placé sur le distributeur en forme de peigne (20).

3. Distributeur en forme de peigne (20) selon l'une des revendications 1 ou 2, caractérisé en ce qu'il est possible de prévoir plus d'un élément de raccordement (3), dans la zone en forme de pont (2) des éléments de contact (1), sur le distributeur en forme de peigne (20).

4. Distributeur en forme de peigne (20) selon l'une des revendications 1 ou 3, caractérisé en ce qu'il est possible de prévoir, pour chaque élément de contact (1) du distributeur en forme de peigne (20), un élément de raccordement (3).

5. Distributeur en forme de peigne (20) selon l'une des revendications 1 ou 3, caractérisé en ce qu'il est possible de prévoir au moins un élément de raccordement (3) au début et à la fin de la rangée que forment i les éléments de contact (1) du distributeur en forme de peigne (20).

6. Distributeur en forme de peigne (20) selon la revendication 1, caractérisé en ce que la direction de raccordement des conducteurs qui sont enfichables dans les éléments de raccordement (3) est parallèle à la direction d'enfichage (18) des éléments de contact (1) dans l'unité de raccordement (13).

7. Distributeur en forme de peigne (20) selon la revendication 1, caractérisé en ce que la direction de raccordement forme un angle d'approximativement 45 degrés avec la direction d'enfichage (18) des éléments de contact (1) dans l'unité de raccordement (13).

8. Distributeur en forme de peigne (20) selon la revendication 1, caractérisé en ce que la direction de raccordement des conducteurs enfichables dans les éléments de raccordement (3) est perpendiculaire à la direction d'enfichage (18) des éléments de contact (1) dans l'unité de raccordement (13).

9. Distributeur en forme de peigne (20) selon l'une des revendications précédentes, caractérisé en ce que l'élément de raccordement (3) est conformé en raccord en étrier à traction ou en raccord en étrier à poussée.

10. Distributeur en forme de peigne (20) selon l'une des revendications précédentes, caractérisé en ce que l'élément de raccordement (3) est conformé en raccord élastique à traction (5).

11. Distributeur en forme de peigne (20) selon l'une des revendications 9 ou 10, caractérisé en ce que la barre conductrice (6) de l'élément de raccordement (3) ne forme qu'une seule pièce avec la zone en forme de pont (2) du distributeur en forme de peigne (20).

12. Distributeur en forme de peigne (20) selon l'une des revendications 9 ou 10, caractérisé en ce que la barre conductrice (6) de l'élément de raccordement (3) est montée détachable sur la zone en forme de pont (2) du distributeur en forme de peigne (20) et, de préférence, enfichable ou vissable.

13. Distributeur en forme de peigne (20) selon l'une des revendications précédentes, caractérisé en ce que les éléments de raccordement (3) présentent des boîtiers (8) électriquement isolants, qui sont susceptibles d'être mécaniquement reliés entre eux au moyen d'éléments (9) de positionnement et/ou d'encliquetage.

14. Distributeur en forme de peigne (20) selon l'une des revendications 8 à 12, caractérisé en ce que les boîtiers (8) des éléments de raccordement (3) présentent des éléments de guidage (12) qui, lorsque le distributeur en forme de peigne (20) est enfiché, soutiennent, avec des éléments (17) correspondants de l'unité de raccordement (13), les éléments de raccordement (3).

15. Distributeur en forme de peigne (20) selon l'une des revendications 13 et 14, caractérisé en ce que les boîtiers (8) des éléments de raccordement (3) et l'isolation (4) de la zone en forme de pont (2) du distributeur en forme de peigne (20) empêchent un contact des composants qui conduisent l'électricité.

16. Distributeur en forme de peigne (20) selon la revendication 14, caractérisé en ce que les boîtiers (8) des éléments de raccordement (3) et l'isolation (4) de la zone en forme de pont (2) du distributeur en forme de peigne (20) ne forment qu'une seule pièce.
